# EUROPÄISCHE PATENTANMELDUNG

(11) **EP 4 659 871 A1**
(43) Veröffentlichungstag der Anmeldung: **10.12.2025**
(21) Anmeldenummer: 24180539.9
(22) Anmeldetag: 06.06.2024
(51) Int. Cl.: B05C 3/12, B05C 5/02

(54) **VERFAHREN UND VORRICHTUNG ZUR HERSTELLUNG VON BESCHICHTETEN DRÄHTEN MIT EINER ABSTREIFVORRICHTUNG ZUM ABSTREIFEN VON ÜBERSCHÜSSIGEM BESCHICHTUNGSMATERIAL VON EINEM MIT BESCHICHTUNGSMATERIAL BENETZTEN DRAHT**

(71) Anmelder: MAG machines GmbH, 8530 Deutschlandsberg (AT)
(72) Erfinder: PASCHER, Gerald, 3911 Rappottenstein (AT); KREMSHOFER, Andreas, 8330 Feldbach (AT); CZAPUTA, Klaus, 8052 Graz (AT)
(74) Vertreter: SONN Patentanwälte GmbH & Co KG

(57) **Zusammenfassung**

Die Erfindung betrifft ein Verfahren und eine Vorrichtung zur Herstellung von beschichteten Drähten (3) mit einer Abstreifvorrichtung (1) zum Abstreifen von überschüssigem Beschichtungsmaterial (2) von einem Draht (4), wobei die Abstreifvorrichtung (1) einen Grundkörper (4) mit einer Abstreif-Durchführung (5) für den Draht (3)und eine in Drahtförderrichtung (6) nach dem Grundkörper (4) angeordnete Anschlageinheit (7) aufweist, wobei die Anschlageinheit (7) eine erste Anschlagfläche (8) aufweist, wobei der Grundkörper (4) eine zweite Anschlagfläche (9) aufweist, wobei die zweite Anschlagfläche (9) im bestimmungsgemäßen Zustand der ersten Anschlagfläche (8) zugewandt ist, wobei die erste Anschlagfläche (8) bei bestimmungsgemäßer Verwendung zumindest abschnittsweise reibschlüssig mit der zweiten Anschlagfläche (9) verbunden ist, wobei der Grundkörper (4) normal zur Drahtförderrichtung (6) verschiebbar gelagert ist, wobei die erste Anschlagfläche (8) oder die zweite Anschlagfläche (9) eine konvexe Krümmung (10) aufweist.

## Beschreibung

Die Erfindung betrifft eine Abstreifvorrichtung zum Abstreifen von überschüssigem Beschichtungsmaterial von einem mit Beschichtungsmaterial benetzten Draht, aufweisend:
- einen Grundkörper mit einer Abstreif-Durchführung für den Draht, wobei der Draht im bestimmungsgemäßen Zustand durch die Abstreif-Durchführung durchgeführt ist und in eine Drahtförderrichtung gefördert wird; und
- eine in Drahtförderrichtung nach dem Grundkörper angeordnete Anschlageinheit;
wobei die Anschlageinheit eine erste Anschlagfläche aufweist, wobei die erste Anschlagfläche im bestimmungsgemäßen Zustand dem Grundkörper zugewandt ist, wobei der Grundkörper eine zweite Anschlagfläche aufweist, wobei die zweite Anschlagfläche im bestimmungsgemäßen Zustand der ersten Anschlagfläche zugewandt ist.

Die Erfindung betrifft weiters eine Applikationseinheit zum Aufbringen zumindest einer Schicht eines Beschichtungsmaterials auf einen Draht aufweisend:
- eine Benetzungseinheit zum Aufbringen des Beschichtungsmaterials, wobei die Benetzungseinheit einen Benetzungseinheit-Grundkörper mit einer Benetzungs-Durchführung für den Draht aufweist.

Weiters betrifft die Erfindung Verfahren zur Herstellung von beschichteten Drähten.

Vorrichtungen und Anlagen zur Herstellung von beschichteten Drähten, beispielsweise von Lackdrähten, mit Abstreifvorrichtungen und Applikationseinheiten sind bereits aus dem Stand der Technik bekannt. Als Lackdrähte werden lackisolierte Metalldrähte, beispielsweise aus Kupfer oder Aluminium, verstanden. Aufgrund der Lackierung kann eine gute Isolation eines elektrischen Leiters gegen einen benachbarten Leiter oder den Träger von Wicklungen erreicht werden. Beschichtete Drähte, wie Lackdrähte, werden insbesondere zur Herstellung von elektrischen Wicklungen verwendet, die zur Stromleitung, Spannungsumwandlung, Feldaufbau und Feldablenkung dienen. Diese Wicklungen sind daher wiederum ein zentraler Bestandteil von Elektromotoren, Transformatoren und Generatoren. Nicht zuletzt aufgrund des Aufschwungs der E-Mobilität steigen sowohl die Nachfrage als auch die Anforderungen an beschichtete Drähte. Die im Stand der Technik bekannten Lacke bestehen im Wesentlichen aus filmbildenden Harzen und Lösungsmitteln.

Entsprechende Anlagen weisen unter anderem eine Einheit zum Aufbringen eines isolierenden Beschichtungsmaterials und einen Ofen zum Verfestigen der aufgebrachten Schicht auf. Der Draht wird typischerweise mittels einer oder mehrerer Stütz- und/oder Umlenkrollen durch die Anlage gefördert.

Eine Vorrichtung und ein Verfahren zur Verarbeitung eines Drahtes mit einer Beschichtungsvorrichtung ist beispielsweise aus der EP 2 930 723 B1 bekannt. Mittels der Beschichtungsvorrichtung wird flüssiger Lack auf einen Draht aufgebracht. Gelöste Polymere in den Lacken vernetzen chemisch nach der Applikation und charakterisieren den Härtungsvorgang des Lackes. Die Lackaufbringung erfolgt über konisch geformte Abstreifdüsen, die mittels einer Förderpumpe kontinuierlich mit frischem Lack beschickt werden. Dort wird ein Lackfilm mit voreingestellter Dicke gleichmäßig auf die Drahtoberfläche aufgetragen. Zum Trocknen des Lacks ist ein Ofen vorgesehen.

Eine Anlage zur Lackdrahtherstellung im Inlineverfahren ist beispielsweise aus der DE 3 118 830 A1 bekannt.

Eine Vielgang-Ofenanlage zur Herstellung von Lackdrähten ist beispielsweise aus der AT 284 931 B bekannt.

Typischerweise wird ein Blankdraht in Form von Endlosmaterial auf einer Spule bereitgestellt oder durch Ziehen aus einem Ausgangsmaterial erzeugt und gefördert. Ferner ist eine Rolle vorgesehen, auf der der Draht aufliegt und mittels derer der Draht gefördert wird. Zum Aufbringen des Beschichtungsmaterials ist typischerweise ein sogenanntes Lackgeschirr vorgesehen, das meist eine oder mehrere Lackbänke aufweist. Jede Lackbank weist ein Becken für das jeweils aufzubringende Material, sowie eine Vorrichtung zum Benetzen des Drahtes und eine Vorrichtung zum Abstreifen von überflüssigem Beschichtungsmaterial, beispielsweise eine Lackierdüse, auf. Der Draht wird rundum mit dem Material benetzt. Anschließend wird überschüssiges Beschichtungsmaterial vom Draht abgestreift, um eine möglichst homogene Schicht zu erhalten. In Folge wird der Draht samt der Materialschicht in einen Ofen gefördert, um das Beschichtungsmaterial zu trocken, auszuhärten und zu verfestigen. Der Beschichtungsvorgang kann mehrere Male wiederholt werden, um die entsprechend vorgesehene Schichtdicke oder auch eine Abfolge unterschiedlicher Materialien zu erreichen.

Grundsätzlich wird bei entsprechenden Anlagen zwischen Vertikalanlagen und Horizontalanlagen unterschieden. Bei Vertikalanlagen wird der Draht während des Beschichtens vertikal gefördert, während der Draht in Horizontalanlagen während des Beschichtens (überwiegend) horizontal gefördert wird. Während Horizontalanlagen gegenüber Vertikalanlagen Vorteile in Hinblick auf die verbesserte Zugänglichkeit und Wartbarkeit, geringere Betriebskosten, geringeren Energieverbrauch und höheren Durchsatz bietet, ist andererseits der Querschnitt von auf Horizontalanlagen hergestellten beschichteten Drähten begrenzt.

Eine zentrale Anforderung an beschichtete Drähte ist eine homogene Dicke der Beschichtung, die durch stark variierende Dicken und Geometrien der Blankdrähte, unterschiedliche Eigenschaften und gewünschte Dicken der Beschichtung und beispielsweise durch von der Anlage auf den Draht übertragene Vibrationen vielfach nicht oder nur schwer zu erreichen sind. Wird der Draht beispielsweise nicht mittig durch die Abstreifvorrichtung geführt, so folgt daraus eine azentrische oder ovale Drahtbeschichtung. Für den Fall, dass sich der Durchgang des Drahtes durch die Abstreifvorrichtung über die Zeit ändert, beispielsweise aufgrund von geringfügigen Prozessschwankungen oder Drahtvibrationen, kann die Schichtdicke entsprechend mit der Zeit variieren. In Folge kann es zu inhomogenen Beschichtungen entlang der Längsachse des Drahts kommen.

Eine inhomogen dicke Beschichtung kann wiederum im anschließenden Trocknungsprozess im Ofen zu unzureichenden bzw. inhomogenen Einbrenngraden, Hautbildungen, Blasenbildung und Rest-Lösemittelanteilen der Beschichtung führen. Außerdem kann es folgewirkend zu Spannungsdurchschlägen und Teilentladungen kommen, die insbesondere an Stellen unzureichender Dicke der Beschichtung auftreten. Derartige Spannungsdurchschläge können zur Beschädigung oder gar zum Ausfall größerer Baugruppen führen und somit drastische Folgen mit sich bringen.

Anlagen zur Herstellung beschichteter Drähte müssen daher präzise auf den Querschnitt und das Material des jeweiligen Drahts, das Beschichtungsmaterial, die Schichtdicke, und weitere Parameter wie die Fördergeschwindigkeit des Drahts eingestellt werden. Eine derartige Justierung ist zeitintensiv und muss von eigens geschultem Personal und meist in mehreren Iterationen durchgeführt werden. Im Rahmen eines Produktionsprozesses ist eine häufige manuelle Feinjustierung kaum zu realisieren. Selbst im Falle einer idealen Einstellung zu Beginn eines Produktionsprozesses, kann es zu geringfügigen Schwankungen kommen, die sich nachteilig auf den beschichteten Draht auswirken. Durch äußere Einflüsse wie Temperatur- oder Luftfeuchteschwankungen kann beispielsweise eine Durchbiegung des Drahtes geringfügig variieren. Ferner können zeitlich rasche Änderungen der exakten Ausrichtung des Drahts wie beispielsweise Drahtvibrationen ohnehin nicht durch manuelles Nachjustieren ausgeglichen werden. Bisher bekannte Anlagen und Prozesse können auf zeitlich variable Bedingungen, die sich nachteilig auf die Homogenität der Beschichtung auswirken, in Summe nur unzureichend reagieren.

Es ist daher Aufgabe der Erfindung die Nachteile aus dem Stand der Technik zu lindern oder gänzlich zu beseitigen. Insbesondere ist es Aufgabe der Erfindung, eine Abstreifvorrichtung zum Abstreifen von überschüssigem Beschichtungsmaterial von einem mit Beschichtungsmaterial benetzten Draht, eine Applikationseinheit zum Aufbringen zumindest einer Schicht eines Beschichtungsmaterials auf einen Draht, sowie ein Verfahren zur Herstellung von beschichteten Drähten zu schaffen, die robust gegenüber äußeren Einflüssen und Prozessschwankungen sind und eine homogene Schichtdicke gewährleisten.

Gelöst wird diese Aufgabe durch eine Abstreifvorrichtung eingangs angeführter Art, wobei die erste Anschlagfläche bei bestimmungsgemäßer Verwendung zumindest abschnittsweise reibschlüssig mit der zweiten Anschlagfläche verbunden ist, wobei der Grundkörper normal zur Drahtförderrichtung verschiebbar gelagert ist, wobei die erste Anschlagfläche oder die zweite Anschlagfläche eine konvexe Krümmung aufweist.

Die Aufgabe wird ebenso von einer Applikationseinheit eingangs angeführter Art gelöst, wobei die Applikationseinheit eine erfindungsgemäße Abstreifvorrichtung zum Abstreifen von überschüssigem Beschichtungsmaterial von dem Draht aufweist, wobei der Draht im bestimmungsgemäßen Zustand durch die Benetzungs-Durchführung und die Abstreif-Durchführung durchgeführt ist.

Die erfindungsgemäße Aufgabe wird ebenso durch ein Verfahren zur Herstellung von beschichteten Drähten mit einer erfindungsgemäßen Applikationseinheit gelöst, mit den Schritten:
- Fördern eines Drahtes in eine Drahtförderrichtung in Richtung der Applikationseinheit;
- Aufbringen einer Schicht des Beschichtungsmaterials auf den Draht mittels der Benetzungseinheit;
- Abstreifen von überschüssigem Beschichtungsmaterial vom Draht mittels der Abstreifvorrichtung;
- Verschieben und/oder Verkippen des Grundkörpers durch eine von dem Beschichtungsmaterial auf den Grundkörper übertragenen Kraft, sodass eine Hauptachse des Drahts mit einer Hauptachse der Abstreif-Durchführung zusammenfällt.

Die Abstreifvorrichtung zum Abstreifen von überschüssigem Beschichtungsmaterial von einem mit Beschichtungsmaterial benetzten Draht weist einen Grundkörper mit einer Abstreif-Durchführung für den Draht auf. Der Draht kann beispielsweise Kupfer und/oder Aluminium aufweisen. Der Draht ohne Beschichtung kann als Blankdraht bezeichnet werden. Der Draht weist eine Hauptachse (auch als Längsachse bezeichnet) und einen Querschnitt normal zur Hauptachse auf. Der Querschnitt kann beispielsweise rund, insbesondere kreisförmig oder oval, sein. Der Querschnitt des Drahts kann alternativ rechteckig, insbesondere quadratisch, sein. Beispielsweise kann der Querschnitt des Drahtes im Wesentlichen rechteckig oder quadratisch sein und abgerundete Kanten aufweisen. Beispielsweise können vierteilkreisförmige Übergangskonturen vorgesehen sein, um scharfe Kanten zu vermeiden. Eine Querschnittsfläche (normal zur Längsachse) des Drahts kann beispielsweise zwischen 0.8 mm² bis 15 mm², insbesondere zwischen 0.8 mm² bis 8 mm² betragen. Eine Breite des Drahts kann beispielsweise zwischen 1 mm und 7 mm betragen. Eine Dicke des Drahts (normal zur Breite) kann beispielsweise zwischen 0.8 mm und 2 mm liegen. Ein Seitenverhältnis zwischen der Breite und der Dicke des Drahts kann beispielsweise zwischen 1 und 8 liegen.

Der mit Beschichtungsmaterial benetzte Draht ist im bestimmungsgemäßen Zustand durch die Abstreif-Durchführung durchgeführt und wird in eine Drahtförderrichtung gefördert. Dadurch wird überschüssiges Beschichtungsmaterial von dem Draht abgestreift. Beispielsweise kann der Draht mittels einer oder mehrerer Stützrollen in die Drahtförderrichtung gefördert werden. Die Stützrolle kann um eine Stützrollenachse drehbar gelagert sein. Die Stützrollenachse steht normal zur Drahtförderrichtung. Die Stützrolle kann beispielsweise eine glatte Oberfläche aufweisen. Die Stützrolle kann dazu eingerichtet sein, mehrere Drähte oder mehrere Drahtdeckungen parallel zueinander abzulagern und in Drahtförderrichtung zu fördern. Die Drahtförderrichtung kann im Wesentlichen in einer horizontalen Ebene liegen. Alternativ kann die Drahtförderrichtung im Wesentlichen in einer vertikalen Ebene liegen.

Die Drahtförderrichtung kann lokal von einer Längsachse des Drahts abweichen. Beispielsweise kann die Drahtförderrichtung durch die Stützrolle und eine weitere Stützrolle, auf der der Draht aufliegt, definiert sein. Der Draht kann zwischen zwei Stützpunkten (beispielsweise auf den Stützrollen) eine Durchbiegung aufweisen. Beispielsweise kann der Draht eine Schwingung oder Vibration aufweisen, wodurch die Hauptachse des Drahts bzw. einer Drahtdeckung lokal von der Drahtförderrichtung abweichen kann. Der Draht wird im Mittel in Drahtförderrichtung gefördert, wobei die Hauptachse des Drahts im Mittel in Drahtförderrichtung liegt und lokal und/oder temporär von der (mittleren) Drahtförderrichtung abweichen kann.

Die Abstreifvorrichtung weist eine in Drahtförderrichtung nach dem Grundkörper angeordnete Anschlageinheit auf. Die Anschlageinheit weist eine erste Anschlagfläche auf, wobei die erste Anschlagfläche im bestimmungsgemäßen Zustand dem Grundkörper zugewandt ist. Der Grundkörper weist eine zweite Anschlagfläche auf, wobei die zweite Anschlagfläche im bestimmungsgemäßen Zustand der ersten Anschlagfläche zugewandt ist. Erfindungsgemäß ist vorgesehen, dass die erste Anschlagfläche bei bestimmungsgemäßer Verwendung zumindest abschnittsweise reibschlüssig mit der zweiten Anschlagfläche verbunden ist, wobei der Grundkörper normal zur Drahtförderrichtung verschiebbar gelagert ist, wobei die erste Anschlagfläche oder die zweite Anschlagfläche eine konvexe Krümmung aufweist.

Durch das Abstreifen des überschüssigen Beschichtungsmaterials vom Draht wird eine Axialkraft auf den Grundkörper übertragen, die entlang der Drahtförderrichtung auf den Grundkörper wirkt. Aufgrund dieser Axialkraft wird der Grundkörper an die Anschlageinheit gedrückt, wodurch ein Reibschluss zwischen der ersten Anschlagfläche und der zweiten Anschlagfläche bewirkt wird. Die Anschlageinheit bildet daher für den Grundkörper einen Anschlag in Drahtförderrichtung. Der Grundkörper weist im bestimmungsgemäßen Gebrauch in Drahtförderrichtung keine translatorische Bewegungsfreiheit auf, da die Bewegung in axialer Richtung durch die Anschlageinheit begrenzt ist und der Grundkörper durch die übertragene Axialkraft an die Anschlageinheit gepresst wird. Der Grundkörper und die Anschlageinheit können ohne diese Axialkraft, d.h. ohne durchgeführten Draht und ohne abgestreiftes überschüssiges Beschichtungsmaterial, getrennt vorliegen. Der Grundkörper kann beispielsweise mit Ausnahme des Reibschlusses keine mechanische Verbindung mit der Anschlageinheit aufweisen. Beispielsweise kann der Grundkörper getrennt von der Anschlageinheit vorliegen. Beispielsweise kann die Anschlageinheit nicht formschlüssig mit dem Grundkörper verbunden sein. Beispielsweise können keine Befestigungsmittel, wie Schrauben, Bolzen oder Nieten, zur Befestigung des Grundkörpers an der Anschlageinheit vorgesehen sein. Der Grundkörper kann bei bestimmungsgemäßer Verwendung (d.h. im Falle eines durchgeführten Drahts und während des Abstreifens von überschüssigem Beschichtungsmaterial) ausschließlich reibschlüssig mit der Anschlageinheit verbunden sein.

Im Falle eines azentrischen Durchgangs des Drahts durch die Abstreifvorrichtung wird durch das abgestreifte überschüssige Beschichtungsmaterial zusätzlich zur Axialkraft auch eine Radialkraft auf den Grundkörper übertragen. Die Radialkraft wirkt normal zu Axialkraft. Die Radialkraft kann im Fall von Runddrähten in Bezug auf den Querschnitt des Drahtes radial nach außen wirken. Auch im Fall von Flachdrähten kann die Radialkraft radial nach außen wirken, wobei aufgrund des nichtrotationssymmetrischen Querschnitts von Flachdrähten auftretende Radialkräfte in unterschiedliche Richtungen normal zu Axialkraft unterschiedlich ausgeprägt sein können. Im Fall eines Flachdrahts kann die Radialkraft im Wesentlichen aus zwei normal zueinander wirkenden Kraftkomponenten zusammengesetzt sein. Der Flachdraht kann beispielsweise einen im Wesentlichen rechteckigen Querschnitt mit einer Länge und eine Höhe aufweisen. Eine erste Kraftkomponente kann entlang der Länge des Querschnitts wirken, während eine zweite Kraftkomponente normal dazu entlang der Höhe des Querschnitts wirken kann. Die beiden Kraftkomponenten resultieren in Radialkraft, die aufgrund der Addition der beiden Kraftkomponenten wiederum eine beliebige Richtung normal zur Axialkraft aufweisen kann.

Aufgrund der (ausschließlich) reibschlüssigen Verbindung zwischen der Anschlageinheit und dem Grundkörper kann der Grundkörper relativ zur Anschlageinheit und normal zur Drahtförderrichtung verschoben werden. Der Grundkörper kann zumindest in eine Richtung normal zur Drahtförderrichtung verschoben werden. Vorzugsweise kann der Grundkörper im Fall einer horizontalen Drahtförderrichtung zumindest vertikal verschoben. Die Anschlageinheit kann eine Führung aufweisen, um ein horizontales Verschieben des Grundkörpers zu verhindern. Optional kann der Grundkörper auch in eine zweite Richtung normal zur ersten Richtung und normal zur Drahtförderrichtung verschoben werden. Der Grundkörper kann daher insgesamt zumindest eine, optional zwei, translatorische Freiheitsgrade aufweisen. Die Radialkraft bewirkt eine Verschiebung des Grundkörpers normal zur Drahtförderrichtung. Diese Verschiebung des Grundkörpers führt zu einer Zentrierung der Abstreif-Durchführung relativ zum Draht und folglich auch zu einer Reduktion der auf den Grundkörper übertragenen Radialkraft. Beispielsweise kann bei einem idealen Durchgang des Drahtes durch die Abstreif-Durchführung im Wesentlichen keine Radialkraft auf den Grundkörper übertragen werden.

Die erste Anschlagfläche oder die zweite Anschlagfläche weist eine konvexe Krümmung auf. Konvex bedeutet, dass die betreffende Fläche nach außen gewölbt ist. Beispielsweise weist ein Zylinder bzw. die Mantelfläche eines Zylinders oder eine Kugel eine konvexe Krümmung auf. Durch die konvexe Krümmung ist der Grundkörper relativ zur Drahtförderrichtung kippbar gelagert. Daher kann eine auf den Grundkörper wirkende Radialkraft zu einer Verkippung des Grundkörpers führen, die wiederum zu einer Reduktion der Radialkraft führt. In Summe wird durch die reibschlüssige und kippbare Lagerung des Grundkörpers und durch die auf den Grundkörper wirkenden Kräfte eine Selbstzentrierung des Drahtes relativ zur Abstreif-Durchführung erreicht. Insbesondere die im Falle einer Fehlausrichtung auf den Grundkörper wirkenden Radialkräfte führen durch die erfindungsgemäße Ausgestaltung der Abstreifvorrichtung zu der Selbstzentrierung. Die Abstreifvorrichtung ist dazu eingerichtet, die auf den Grundkörper wirkenden Radialkräfte zu minimieren und so eine Selbstzentrierung zu erreichen. Diese Selbstzentrierung ist konstruktiv bedingt und bedarf daher keiner manuellen Justierung. Ferner ist die Abstreifvorrichtung durch die Selbstzentrierung in der Lage, zeitlich variablen Schwankungen zu folgen und eine gleichbleibende Homogenität der Schichtdicke des Beschichtungsmaterials zu gewährleisten. Beispielsweise kann der Grundkörper etwaigen Schwingungen des Drahtes und/oder einer etwaigen variablen Durchbiegung des Drahtes folgen. Der Grundkörper kann relativ zur Drahtförderrichtung um einen Winkel von bis zu 20°, insbesondere bis zu 10° verkippt werden. Die erste Anschlagfläche oder die zweite Anschlagfläche kann einen Krümmungsradius von 2 mm bis 10 mm aufweisen. Insbesondere kann der Krümmungsradius in einem Bereich zwischen 4 mm und 8,5 mm liegen.

Der Draht liegt im bestimmungsgemäßen Zustand nicht direkt auf dem Grundköper auf. Lediglich ein Teil des flüssigen Beschichtungsmaterials am benetzen Draht kommt in Kontakt mit dem Grundkörper, wodurch überflüssiges Beschichtungsmaterial abgestreift wird. Der Grundkörper ist daher schwimmend auf dem Draht samt dem Beschichtungsmaterial gelagert. Eine Schichtdicke des Beschichtungsmaterials am Draht kann beispielsweise zwischen 10 µm und 40 µm liegen. Der Draht kann in Drahtförderrichtung beispielsweise mit einer Geschwindigkeit zwischen 8 m/min und 200 m/min gefördert werden.

Die erste Anschlagfläche kann gegenüber der zweiten Anschlagfläche entlang einer ersten Richtung, insbesondere vertikal, beispielsweise in einem Bereich von 110mm, insbesondere in einem Bereich von ±4,5mm verschoben werden. Die erste Anschlagfläche kann beispielsweise um mindestens ±4,5 mm gegenüber der zweiten Anschlagfläche verschoben werden. Die erste Anschlagfläche kann beispielsweise gegenüber der zweiten Anschlagfläche entlang einer zweiten Richtung, insbesondere horizontal (d.h. seitlich), beispielsweise in einem Bereich von ±15 mm, insbesondere in einem Bereich von ±4,5 mm verschoben werden. Optional kann die Anschlageinheit zusätzlich zu dem axialen Anschlag einen Anschlag in eine Richtung normal zur Drahtförderrichtung aufweisen, um eine Verschiebbarkeit des Grundkörpers zu begrenzen. Beispielsweise kann im Fall einer horizontalen Drahtförderrichtung ein seitliches Spiel des Grundkörpers zwischen 2 mm und 3 mm betragen, d.h. der Grundkörper kann seitlich um bis zu 3 mm verschoben werden. Durch den Einfluss der Gravitation und die daraus resultierende vertikale Durchbiegung des Drahtes ist bei einer horizontalen Drahtförderrichtung (wie es bei Horizontalanlagen der Fall ist) ein Ausgleich von vertikalen Schwankungen kritischer als ein Ausgleich von etwaigen weiteren horizontalen Einflüssen. Daher kann eine vertikale Verschiebbarkeit eine seitliche Verschiebbarkeit übersteigen.

Neben der Axialkraft und der Radialkraft, die aufgrund des abgestreiften Beschichtungsmaterials auf den Grundkörper wirken, wirkt aufgrund der Masse des Grundkörpers auch eine Gewichtskraft auf den Grundkörper. Die Gewichtskraft kann im Falle eine Horizontalanlage (mit einer im Wesentlichen horizontalen Drahtförderrichtung) normal zur Drahtförderrichtung wirken. Um einen etwaigen Einfluss dieser Gewichtskraft auf die Homogenität der Schichtdicke zu minimieren, ist es vorteilhaft, wenn der Grundkörper eine möglichst kleine Masse aufweist. Eine kleine Masse führt ferner zu einer geringen Trägheit des Grundkörpers und daher zu einer raschen Selbstzentrierung, mit der besonders rasche Schwankungen ausgeglichen werden können. Aufgrund der Gewichtskraft der Düse kann es zu einem auf den Grundkörper wirkenden Drehmoment kommen. Beispielsweise kann die auf den Grundkörper wirkende Axialkraft dieses gewichtsbedingte Drehmoment kompensieren, sodass der Grundkörper nicht auf ungewünschte Weise normal zur Drahtförderrichtung verkippt wird. Je geringer die Masse des Grundkörpers ist, desto geringer ist auch dieses gewichtsbedingte Drehmoment. Beispielsweise kann der Grundkörper in Drahtförderrichtung möglichst kurz und normal dazu möglichst schmal ausgestaltet sein. Beispielsweise kann eine Länge des Grundkörpers in Drahtförderrichtung zwischen 5 mm und 40 mm liegen. Eine Höhe des Grundkörpers normal zur Drahtförderrichtung kann beispielsweise zwischen 5 mm und 20 mm liegen. Eine Breite des Grundkörpers normal zur Höhe und normal zur Länge kann beispielsweise zwischen 10 mm und 20 mm liegen. Der Grundkörper kann beispielsweise ein Metall aufweisen. Beispielsweise kann der Grundköper Edelstahl aufweisen. Vorzugsweise kann der Grundkörper Titan aufweisen oder aus Titan bestehen. Titan weist eine geringere Massendichte als Edelstahl auf, wodurch der Grundkörper durch Verwendung von Titan eine besonders niedrige Masse aufweisen kann. Der Grundkörper kann Aluminium oder einen Kunststoff, wie beispielsweise Teflon, aufweisen. Der Grundkörper kann ein Material aufweisen, das eine hohe Beständigkeit gegenüber organischen Drahtlacklösemitteln sowie eine hohe Formbeständigkeit aufweist bzw. gewährleistet. Der Grundkörper kann mittels Erodieren hergestellt werden. Der Grundkörper kann beispielsweise eine Masse von weniger als **10** g aufweisen. Vorzugsweise ist die Masse des Grundkörpers kleiner als **5** g. Insbesondere kann die Masse des Grundkörpers zwischen 5 g und 7 g betragen.

Die Anschlageinheit kann einteilig oder mehrteilig sein. Beispielsweise kann die Anschlageinheit ein oder mehrere Anschlagelemente aufweisen, mit dem oder mit denen der Grundkörper reibschlüssig verbunden sein kann. Die erste Anschlagfläche kann beispielsweise abschnittsweise auf einem Anschlagelement und abschnittsweise auf einem weiteren Anschlagelement liegen. Weder der Draht noch das Beschichtungsmaterial kommen im bestimmungsgemäßen Gebrauch in Berührung mit der Anschlageinheit. Insbesondere tritt der Draht ungehindert aus der Abstreif-Durchführung des Grundkörpers aus. Die Abstreif-Durchführung wird von der Anschlageinheit nicht verdeckt. Die Anschlageinheit kann beispielsweise eine weitere Durchführung für den Draht aufweisen.

Das Beschichtungsmaterial ist während des Benetzens des Drahtes (beispielsweise eines Blankdrahtes oder eines bereits mit Beschichtungsmaterial beschichteten Drahtes) und während des Abstreifens flüssig und kann folglich getrocknet und/oder ausgehärtet werden. Das Beschichtungsmaterial kann beispielsweise ein Lack, insbesondere ein Drahtlack, sein. Der Drahtlack kann beispielsweise Polymere aufweisen, die in einem Lösungsmittel, insbesondere in einem organischen Lösungsmittel, gelöst sind. Das Beschichtungsmaterial kann eine nichtnewtonsche Flüssigkeit aufweisen oder sein. Eine dynamische Viskosität des Beschichtungsmaterials kann beispielsweise zwischen 500 mPas (Millipascalsekunden) und 12000 mPas liegen.

Die erfindungsgemäße Applikationseinheit zum Aufbringen zumindest einer Schicht des Beschichtungsmaterials auf den Draht weist eine Benetzungseinheit zum Aufbringen des Beschichtungsmaterials auf, wobei die Benetzungseinheit einen Benetzungseinheit-Grundkörper mit einer Benetzungs-Durchführung für den Draht aufweist. Die Applikationseinheit ist dazu eingerichtet, den Draht mit dem Beschichtungsmaterial zu benetzen und überschüssiges Beschichtungsmaterial abzustreifen, um eine homogene Schicht an Beschichtungsmaterial auf dem Draht zu erzeugen. Die Applikationseinheit weist dazu zumindest eine Benetzungseinheit zum Aufbringen des Beschichtungsmaterials auf. Der Benetzungseinheit-Grundkörper kann einteilig oder mehrteilig sein. Eine Hauptachse der Benetzungs-Durchführung liegt im bestimmungsgemäßen Zustand in Drahtförderrichtung, sodass der Draht durch die Benetzungs-Durchführung gefördert wird. Die Benetzungs-Durchführung kann beispielsweise einen konstanten Querschnitt normal zur Drahtförderrichtung aufweisen. Die Benetzungseinheit kann mit einem Reservoir oder Tank verbunden sein, in dem sich Beschichtungsmaterial befindet, und mit Beschichtungsmaterial versorgt werden. Die Benetzungs-Durchführung kann beispielsweise mit flüssigem Beschichtungsmaterial geflutet werden. Die Benetzungseinheit kann den Draht rundum mit Beschichtungsmaterial benetzen.

Die Applikationseinheit weist eine erfindungsgemäße Abstreifvorrichtung zum Abstreifen von überschüssigem Beschichtungsmaterial von dem Draht auf. Die Abstreifvorrichtung ist in Drahtförderrichtung nach der Benetzungseinheit angeordnet. Der Draht ist im bestimmungsgemäßen Zustand durch die Benetzungs-Durchführung und die Abstreif-Durchführung durchgeführt. Die Hauptachse der Benetzungs-Durchführung kann vorzugsweise mit der Hauptachse der Abstreif-Durchführung zusammenfallen, d.h. die Hauptachse der Benetzungs-Durchführung und die Hauptachse der Benetzungs-Durchführung können auf einer (gemeinsamen) Geraden liegen. Die Benetzungs-Durchführung ist typischerweise deutlich größer als die Abstreif-Durchführung, weshalb Fehlausrichtungen des Drahtes im Verhältnis zu einer Hauptachse der Benetzungsdurchführung deutlich weniger kritisch sind, als Fehlausrichtungen des Drahtes zur Hauptachse der Abstreif-Durchführung. Während die Benetzungseinheit lediglich für eine ausreichende Benetzung des Drahtes verantwortlich ist, hängt die Homogenität der Schichtdicke des auf dem Draht verbleibenden Beschichtungsmaterials maßgeblich von der Abstreifvorrichtung ab.

Die erfindungsgemäße Aufgabe wird ebenso durch ein Verfahren zur Herstellung von beschichteten Drähten mit einer erfindungsgemäßen Applikationseinheit gelöst, mit den Schritten:
- Fördern eines Drahtes in Drahtförderrichtung in Richtung der Applikationseinheit;
- Aufbringen einer Schicht des Beschichtungsmaterials auf den Draht mittels der Benetzungseinheit;
- Abstreifen von überschüssigem Beschichtungsmaterial vom Draht mittels der Abstreifvorrichtung;
- Verschieben und/oder Verkippen des Grundkörpers durch eine von dem Beschichtungsmaterial auf den Grundkörper übertragenen Kraft, sodass eine Hauptachse des Drahts mit einer Hauptachse der Abstreif-Durchführung zusammenfällt.

Die auf den Draht übertragene Kraft, die für das Verschieben und/oder Verkippen des Grundkörpers verantwortlich ist, ist die oben diskutierte Radialkraft. Insbesondere aufgrund des durch die Radialkraft bewirkte und durch die erfindungsgemäße Abstreifvorrichtung ermöglichte Verschieben und/oder Verkippen des Grundkörpers können etwaige Fehlausrichtungen des Drahtes im Verhältnis zur Hauptachse der Abstreif-Durchführung auf einfache Weise, rasch und ohne manuellen Eingriff ausgeglichen werden.

Die erfindungsgemäße Abstreifeinheit kann sowohl in Horizontalanlagen als auch in Vertikalanlagen verwendet werden. Während in Horizontalanlagen in erster Linie Effekte aufgrund der vertikalen Durchbiegung des Drahtes ausgeglichen werden, können bei Vertikalanlagen überwiegend Drahtvibrationen bzw. - schwingungen und etwaige weitere Bewegungen quer zur Drahtförderrichtung ausgeglichen werden.

Beispielsweise kann die erste Anschlagfläche planar sein und die zweite Anschlagfläche die konvexe Krümmung aufweisen. Die planare erste Anschlagfläche kann sich insbesondere normal zur Drahtförderrichtung erstrecken. Der Grundkörper kann einen halbzylinderförmigen Abschnitt aufweisen, der die zweite Anschlagfläche mit der konvexen Krümmung aufweist. Die zweite Anschlagfläche des Grundkörpers liegt folglich abschnittsweise entlang einer Geraden auf der planaren ersten Anschlagfläche der Anschlageinheit auf. Entlang dieser Geraden ist der Grundkörper reibschlüssig mit der Anschlageinheit verbunden.

Die zweite Anschlagfläche kann optional in zwei zueinander orthogonale Richtungen gekrümmt sein. Beispielsweise kann der Grundkörper einen halbkugelförmigen Abschnitt aufweisen. Die zweite Anschlagfläche des Grundkörpers liegt folglich zumindest abschnittsweise entlang eines Kreises auf der planaren ersten Anschlagfläche der Anschlageinheit auf. Entlang dieses Kreises ist der Grundkörper (zumindest abschnittsweise) reibschlüssig mit der Anschlageinheit verbunden.

Alternativ kann die zweite Anschlagfläche planar sein und erste Anschlagfläche die konvexe Krümmung aufweisen.

Der Grundkörper kann die Abstreif-Durchführung mit einer Drahteintrittsöffnung und einer Drahtaustrittsöffnung aufweisen, wobei eine Hauptebene der Drahtaustrittsöffnung im bestimmungsgemäßen Zustand mit einer Haupterstreckungsebene der ersten Anschlagfläche zusammenfällt. Die Abstreif-Durchführung kann einen konstanten oder einen variablen Querschnitt aufweisen. Der Grundkörper mit der Abstreif-Durchführung kann als Lackierdüse bezeichnet werden. Insbesondere ein Abschnitt der Abstreif-Durchführung mit dem kleinsten Querschnitt ist für die resultierende Schichtdicke des am Draht verbleibenden Beschichtungsmaterial entscheidend. Dieser Abschnitt mit minimalem Querschnitt wird auch als Kalibrierzone bezeichnet. Die Kalibrierzone ist typischerweise an einem in Drahtförderrichtung gesehen hinteren Ende der Lackierdüse angeordnet. Insbesondere die exakte Ausrichtung des Drahtes im Verhältnis zur Kalibrierzone ist für die Schichtdicke entscheidend. Die Kalibrierzone kann beispielsweise Diamant, polykristallinen Diamant (PKD)oder Hartmetall (z.B. Wolframkarbid) aufweisen. Beispielsweise kann der Grundkörper Edelstahl, Werkzeugstahl oder Titan aufweisen und mit Hartmetall beschichtet sein. Für die Selbstjustierung ist ein Abstand der Kalibrierzone zu einem Auflagebereich, in dem die erste Anschlagfläche an der zweiten Anschlagfläche anliegt, relevant. Ein besonders genauer Durchgang des Drahtes durch die Kalibrierzone kann beispielsweise dadurch erreicht werden, dass die Drahtaustrittsöffnung im bestimmungsgemäßen Zustand zumindest teilweise in der Haupterstreckungsebene der (planaren) ersten Anschlagfläche liegt. Beispielsweise kann die Haupterstreckungsebene der ersten Anschlagfläche die Kalibrierzone schneiden.

Beispielsweise kann der Grundkörper einen Massenschwerpunkt aufweisen, wobei der Massenschwerpunkt im bestimmungsgemäßen Zustand in einer Haupterstreckungsebene der ersten Anschlagfläche liegt. In diesem Fall kommt es zu keinen signifikanten oder keinen Drehmomenten auf den Grundkörper, die alleine aus der Gewichtskraft des Grundkörpers resultieren. Diese Ausführungsform führt zu einem besonders stabilen Prozess. Durch das Abstreifen von überschüssigem Beschichtungsmaterial wirkt auch eine Gewichtskraft von überschüssigem Beschichtungsmaterial auf den Grundkörper. Der Grundkörper samt abgestreiftem Beschichtungsmaterial kann einen Schwerpunkt aufweisen, der von dem Massenschwerpunkt des Grundkörpers abweichen kann. Um masseninduzierte Drehmomente auf den Grundkörper besonders effizient zu vermeiden, kann der Schwerpunkt des Grundkörpers samt überschüssigem Beschichtungsmaterial in der Haupterstreckungsebene der ersten Anschlagfläche liegen. Der Massenschwerpunkt des Grundkörpers kann beispielsweise auf einem 3D-Modell des Grundkörpers bestimmt werden, auf Basis dessen der Grundkörper gefertigt sein kann. Im 3D-Modell kann das Material (oder die Materialien) der Grundkörpers und optional des Beschichtungsmaterials hinterlegt sein. Der Massenschwerpunkt des Grundkörpers samt überschüssigem Beschichtungsmaterial somit aus dem 3D-Modell abgeschätzt oder ermittelt werden. An der Eintrittsöffnung des Grundkörpers kann ein kugelkalottenförmiges Volumen an überschüssigem Beschichtungsmaterial angenommen werden, wobei der Kalottendurchmesser an einer Grenzfläche zum Grundkörper einem Innendurchmesser der Eintrittsöffnung entsprechen kann. Etwaige untergeordnete Anteile des insgesamt resultierenden Massenschwerpunkts, die aufgrund der Schwerkraft durch unten fließendes Beschichtungsmaterial induziert werden können, können in dieser Abschätzung optional vernachlässigt werden, da die Anteile des Beschichtungsmaterials am Massenschwerpunkt des Grundkörpers samt dem überschüssigen Beschichtungsmaterial vergleichsweise gering sind. Ein etwaiger weiterer untergeordneter Einfluss aufgrund einer Massendichte des Beschichtungsmaterials in Abhängigkeit des verwendeten Materials und/oder der Temperatur kann vernachlässigt werden.

Optional kann die Abstreif-Durchführung in Drahtförderrichtung zumindest abschnittsweise konisch verjüngt sein. Die Abstreif-Durchführung kann beispielsweise ausgehend von der Eintrittsöffnung trichterförmig zusammenlaufen und in einen Bereich mit konstantem Querschnitt übergehen. Durch die konische Verjüngung der Abstreif-Durchführung kann es zu einer besonders hohen Radialkraft aufgrund einer Fehlausrichtung des Drahtes und durch abgestreiftes Beschichtungsmaterial kommen. Da insbesondere die Radialkraft für die Selbstjustierung entscheidend ist, ist diese Ausführungsform der Abstreif-Durchführung besonders gut geeignet, um Fehlausrichtungen auszugleichen. Die Abstreif-Durchführung kann zumindest eine Symmetrieebene aufweisen. Die Hauptachse der Abstreif-Durchführung kann vorzugsweise in der Symmetrieebene liegen. Vorzugsweise kann die Abstreif-Durchführung zumindest eine zweite Symmetrieebene aufweisen, die normal zur ersten Symmetrieebne steht. Diese symmetrische Ausführungsform ist insbesondere im Zusammenhang mit Flachdrähten vorteilhaft. Beispielsweise kann die Abstreif-Durchführung rotationssymmetrisch in Bezug auf die Hauptachse der Abstreif-Durchführung sein. Diese Ausführungsform ist insbesondere in Bezug auf Runddrähte vorteilhaft. Symmetrische Ausführungsformen der Abstreif-Durchführungen führen zu entsprechend symmetrischen Radialkräften im Falle einer Fehlausrichtung und somit zu besonders homogenen und reproduzierbaren Schichtdicken.

Optional kann ein Querschnitt der Abstreif-Durchführung in Drahtförderrichtung abschnittsweise konstant sein. Insbesondere in der Kalibrierzone kann der Querschnitt konstant sein, um besonders homogene Schichtdicken zu erzeugen.

Vorzugsweise kann die Anschlageinheit zwei Anschlagelemente aufweisen, wobei die Anschlagelemente quer zur Drahtförderrichtung voneinander beabstandet sind. Dadurch kann besonders einfach sichergestellt werden, dass die Abstreif-Durchführung nicht von der Anschlageinheit verdeckt wird.

Optional kann der Grundkörper zumindest zweiteilig sein und zumindest zwei Teile aufweisen. Der Grundkörper kann beispielsweise entlang einer Ebene geteilt sein, in der eine Hauptachse der Abstreif-Durchführung liegt. Somit kann der Grundkörper, insbesondere die beiden Teile des Grundkörpers, besonders einfach hergestellt werden. Beispielsweise können die beiden Teile formschlüssig miteinander verbunden sein. Die beiden Teile können beispielsweise mittels Befestigungsmitteln wie Schrauben oder Klemmen lösbar miteinander verbunden sein. Dadurch ist ein Tausch eines Grundkörpers (beispielsweise um eine andere Beschichtungsdicke zu wählen) besonders einfach möglich. Im Fall eines einteiligen Grundkörpers muss typischerweise der Draht durchtrennt werden, um den Draht aus der Abstreif-Durchführung entfernen zu können. Im Fall eines zwei- oder mehrteiligen Grundkörpers kann der Grundkörper ohne Durchtrennung des Drahts getauscht werden. Durch die Teilung des Grundkörpers können die einzelnen Teile besonders einfach hergestellt werden. Beispielsweise können die beiden Teile durch Erodieren hergestellt werden. Besonders im Fall eines zwei- oder mehrteiligen Grundkörpers ist es günstig, wenn der Grundkörper im Wesentlichen quaderförmig ist, um die Verwendung von Schrauben als Befestigungsmittel zu vereinfachen.

Vorzugsweise ist die Anschlageinheit um eine Achse normal zur Drahtförderrichtung drehbar gelagert. Beispielsweise kann die zweite Anschlagfläche in eine erste Richtung normal zur Drahtförderrichtung eine konvexe Krümmung aufweisen und in eine zweite Richtung normal zur ersten Richtung keine Krümmung aufweisen. Beispielsweise kann der Grundkörper einen halbzylinderförmigen Abschnitt aufweisen. Demnach kann der Grundkörper entlang der konvexen Krümmung der Mantelfläche des halbzylinderförmigen Abschnitts, der die zweite Anschlagfläche bildet, abrollen und somit verkippen. Dadurch ist eine Verkippung in eine erste Richtung normal zur Drahtförderrichtung (entsprechend der konvexen Krümmung) möglich. Mit anderen Worten hat der Grundkörper einen ersten rotatorischen Freiheitsgrad. Im Falle einer im Wesentlichen horizontalen Drahtförderrichtung kann der Grundkörper vorzugsweise zumindest vertikal verkippt werden, da äußere Einflüsse überwiegend zu vertikalen Schwingungen führen können. Auch eine Durchbiegung des Drahtes aufgrund einer auf den Draht wirkenden Gewichtskraft ist naturgemäß vertikal ausgerichtet. Daher ist eine Kippbarkeit des Grundkörpers in vertikale Richtung besonders vorteilhaft.

Wenn die Anschlageinheit um eine Achse normal zur Drahtförderrichtung drehbar gelagert ist, hat der Grundkörper relativ zur Drahtförderrichtung einen zweiten rotatorischen Freiheitsgrad, der vorzugsweise nicht mit dem ersten rotatorischen Freiheitsgrad zusammenfällt. Beispielsweise kann die Achse der Anschlageinheit normal zu einer Hauptachse des halbzylindrischen Abschnitts liegen.

Optional kann ein Draht vorgesehen sein und durch die Abstreif-Durchführung durchgeführt sein. Der Draht kann mit Beschichtungsmaterial beschichtet sein und durch die Abstreif-Durchführung gefördert werden, um überflüssiges Beschichtungsmaterial abzustreifen.

Im Fall einer starken Benetzung des Drahtes mit überschüssigem Beschichtungsmaterial kann es in seltenen Fällen dazu kommen, dass abgestreiftes Beschichtungsmaterial durch Adhäsionskräfte über den Grundkörper auf die erste Anschlagfläche und/oder die zweite Anschlagfläche gelangt. Um diesen Effekt zu vermeiden, kann der Grundkörper eine Begrenzung aufweisen, die dazu ausgebildet ist, das Beschichtungsmaterial davon abzuhalten, zu der ersten und/oder der zweiten Anschlagfläche zu gelangen. Die Begrenzung kann eine Krause und/oder einen Wulst aufweisen. Die Begrenzung kann beispielsweise die Drahteintrittsöffnung umranden. Die Begrenzung kann normal zu der Drahtförderrichtung von der Drahteintrittsöffnung beabstandet sein. Die Begrenzung kann beispielsweise eine Kante aufweisen.

Die Applikationseinheit kann optional auf oder in einem Sammelbecken für das Beschichtungsmaterial angeordnet sein, wobei das Sammelbecken und die zumindest eine Applikationseinheit eine Lackbank bilden. Das durch die Abstreifvorrichtung vom Draht abgestreifte Beschichtungsmaterial tropft in das Sammelbecken und kann optional wiederverwendet werden. Beispielsweise können mehrere Applikationseinheiten parallel zueinander auf oder in einem Sammelbecken angeordnet sein.

Eine Vorrichtung zur Herstellung von beschichteten Drähten weist eine erfindungsgemäße Applikationseinheit zum Aufbringen zumindest einer Schicht eines Beschichtungsmaterials und einem Ofen zum Verfestigen der aufgebrachten Schicht auf, wobei der Ofen in Drahtförderrichtung nach der Applikationseinheit angeordnet ist. Der Ofen ist dazu eingerichtet, den Draht samt dem von der Applikationseinheit aufgebrachtem Beschichtungsmaterial zu erhitzen, um das Beschichtungsmaterial zu trockenen und auszuhärten. Eine Temperatur innerhalb des Ofens kann beispielsweise zwischen 300°C und 800°C, insbesondere zwischen 450°C und 700°C, betragen. Der Draht liegt im bestimmungsgemäßen Zustand weder in der Applikationseinheit noch im Ofen auf. Der Draht kann auf der Stützrolle aufliegen und auf einer weiteren Rolle, die nach dem Ofen angeordnet ist. Dadurch liegt der Draht nicht auf, solange sich flüssiges (d.h. noch nicht ausgehärtetes) Beschichtungsmaterial auf dem Draht befindet. Insbesondere liegt der Draht innerhalb der Abstreif-Durchführung nicht auf dem Grundkörper auf. Lediglich ein Teil des flüssigen Beschichtungsmaterials am Draht kommt in Kontakt mit dem Grundkörper, wodurch überflüssiges Beschichtungsmaterial abgestreift wird.

Die Vorrichtung kann mehrere Lackbänke aufweisen, die in Drahtförderrichtung nacheinander, d.h. seriell, angeordnet sind.

Die Gesamtheit der Applikationseinheiten bzw. der Lackbänke kann als Lackgeschirr bezeichnet werden.

Im Folgenden wird die Erfindung an Hand von Figuren näher erläutert, auf die sie allerdings nicht beschränkt sein soll. Es zeigen:
Fig. 1A eine schematische Ansicht einer Abstreifvorrichtungen samt einem Draht;
Fig. 1B eine schematische Ansicht zweier paralleler Abstreifvorrichtungen für parallele Drähte oder Drahtdeckungen;
Fig. 2A eine schematische Ansicht des Grundkörpers aus den Figuren 1A und 1B;
Fig. 2B eine schematische Explosionsansicht des Grundkörpers aus Fig. 2A;
Fig. 3A-C schematisch eine seitliche Ansicht einer Abstreifvorrichtung mit einem Draht in drei verschiedenen Stellungen;
Fig. 4A schematisch eine weitere Ausführungsform eines Grundkörpers 4;
Fig. 4B zeigt eine Draufsicht auf das zweite Teil des Grundkörpers aus Figur 4A;
Fig. 5 eine weitere Ausführungsform eines Grundkörpers;
Fig. 6 eine weitere Ausführungsform eines Grundkörpers;
Fig. 7 eine Abstreifvorrichtung 1 mit einer weiteren Ausführungsform einer Anschlageinheit;
Fig. 8A, 8B und 8C eine Lackbank mit mehreren parallelen Applikationseinheiten;
Fig. 9A schematisch eine weitere Ausführungsform eines Grundkörpers mit einer in zwei Richtungen gekrümmten zweiten Anschlagfläche;
Fig. 9B eine schematische Ansicht einer Abstreifvorrichtung mit dem Grundkörper aus Fig. 9A;
Fig. 10A schematisch eine weitere Ausführungsform eines Grundkörpers mit einer in zwei Richtungen gekrümmten zweiten Anschlagfläche;
Fig. 10B eine schematische Schnittansicht einer Abstreifvorrichtung mit dem Grundkörper aus Fig. 10A;
Fig. 11A schematisch eine weitere Ausführungsform einer Abstreifvorrichtung mit einem Grundkörper; und
Fig. 11B eine schematische Ansicht der Abstreifvorrichtung aus Fig. 11A.

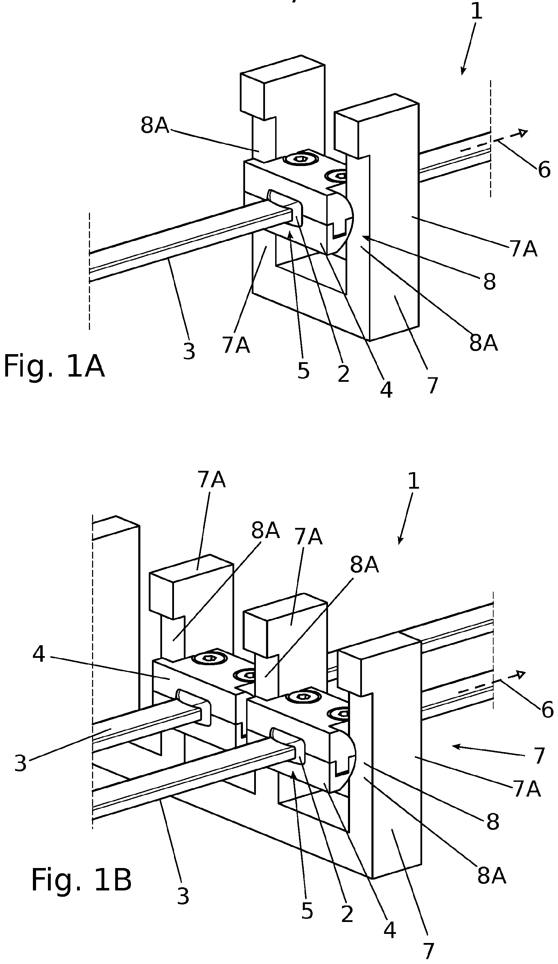

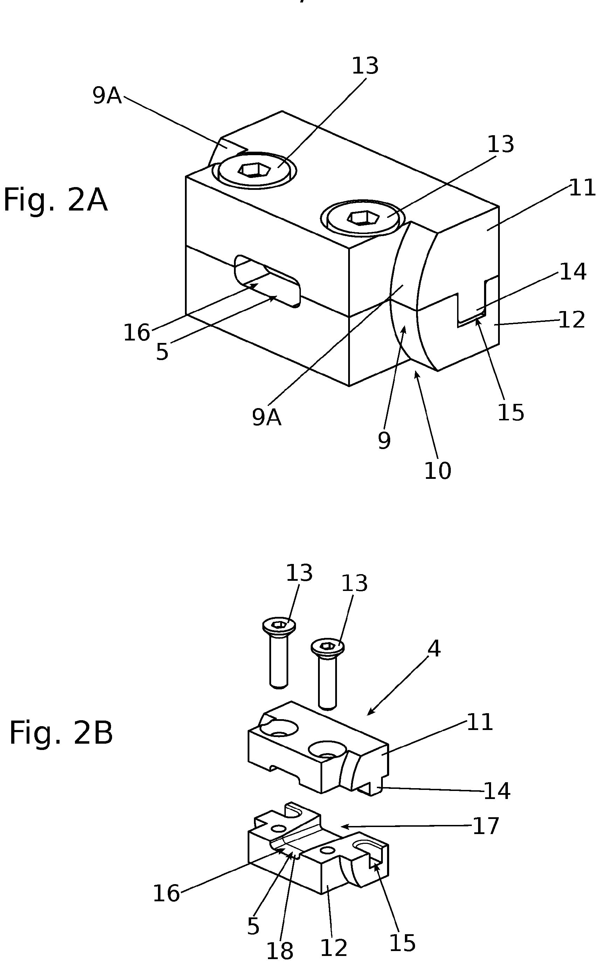

Fig. 1A zeigt schematisch eine Abstreifvorrichtungen 1 zum Abstreifen von überschüssigem Beschichtungsmaterial 2 von einem mit Beschichtungsmaterial benetzten Draht 3 mit einem Grundkörper 4 mit einer Abstreif-Durchführung 5 (vgl. Fig. 2A) für den Draht 3, wobei der Draht 3 im bestimmungsgemäßen (und in diesem Ausführungsbeispiel auch dargestellten) Zustand durch die Abstreif-Durchführung 5 durchgeführt ist und in eine Drahtförderrichtung 6 gefördert wird. In Drahtförderrichtung 6 nach dem Grundkörper 4 ist eine Anschlageinheit 7 angeordnet. Die Anschlageinheit 7 weist eine erste Anschlagfläche 8 auf, wobei die erste Anschlagfläche 8 im bestimmungsgemäßen Zustand dem Grundkörper 4 zugewandt ist. Der Grundkörper 4 weist eine zweite Anschlagfläche 9 (siehe Fig. 2A) auf, wobei die zweite Anschlagfläche 9 im bestimmungsgemäßen (und hier dargestellten) Zustand der ersten Anschlagfläche 8 zugewandt ist. Die erste Anschlagfläche 8 ist bei bestimmungsgemäßer Verwendung zumindest abschnittsweise reibschlüssig mit der zweiten Anschlagfläche 9 verbunden. Der Grundkörper 4 ist normal zur Drahtförderrichtung 6 verschiebbar gelagert. Die Drahtförderrichtung 6 ist in diesem Ausführungsbeispiel horizontal ausgerichtet (wie es bei Horizontalanlagen der Fall ist). Die erste Anschlagfläche 8 oder die zweite Anschlagfläche 9 weist eine konvexe Krümmung 10 auf. In diesem Ausführungsbeispiel ist die erste Anschlagfläche 8 planar und die zweite Anschlagfläche 9 weist die konvexe Krümmung 10 auf. Durch die konvexe Krümmung 10 der zweiten Anschlagfläche 9 und die reibschlüssige Verbindung der ersten Anaschlagfläche 8 mit der zweiten Anschlagfläche 9, kann der Grundkörper 4 zumindest vertikal verschoben und vertikal verkippt werden, um etwaige Fehlausrichtungen des Drahts 3 im Verhältnis zur Abstreif-Durchführung 5 ausgleichen zu können.

In diesem Ausführungsbeispiel ist der Draht 3 vorgesehen und durch die Abstreif-Durchführung 5 durchgeführt. Der Draht 3 ist in diesem Ausführungsbeispiel ein Flachdraht mit einem im Wesentlichen rechteckigen Querschnitt. Alternativ kann der Draht ein Runddraht mit einem runden, insbesondere kreisförmigen, Querschnitt sein.

Die Anschlageinheit 7 weist zwei Anschlagelemente 7A, wobei die Anschlagelemente 7A quer zur Drahtförderrichtung 6, in diesem Beispiel normal zur Drahtförderrichtung 6, voneinander beabstandet sind.

Fig. 1B zeigt zwei Abstreifvorrichtungen 1, die in Bezug auf die Drahtförderrichtung 6 parallel zueinander ausgerichtet sind, um parallele Drähte 3 bzw. Drahtdeckungen zu verarbeiten. Die Anschlageinheit 7 weist normal zur Drahtförderrichtung 6 angeordnete Anschlagelemente 7A auf, die einen Kamm bilden.

Fig. 2A zeigt eine schematische Ansicht des Grundkörpers 4 aus den Figuren 1A und 1B. Der Grundkörper 3 ist in diesem Ausführungsbeispiel zweiteilig und weist ein erstes Teil 11 und ein zweites Teil 12 (d.h. zwei Teile 11 und 12) auf, die miteinander mittels Schrauben 13 lösbar verbunden sind. Das erste Teil 11 weist ein Formschlusselement 14 auf, das formschlüssig mit einer Ausnehmung 15 des zweiten Teils 12 zusammenwirkt. Durch den Formschluss kann eine laterale Verschiebung des ersten Teil 11 relativ zum zweiten Teil 12 (d.h. normal zu einer Hauptachse der Schrauben 13) besonders einfach vermieden werden.

Der Grundkörper 3 weist einen Massenschwerpunkt auf. Der Massenschwerpunkt liegt im bestimmungsgemäßen Zustand in einer Haupterstreckungsebene der (planaren) ersten Anschlagfläche 8 (siehe Fig. 1). Um dies zu erreichen wird in diesem Ausführungsbeispiel die zweite Anschlagfläche 9 von zwei konvexen Abschnitten 9A gebildet, die im Vergleich zu einer Drahtaustrittsöffnung 16 des Grundkörpers 4 entgegen der Drahtförderrichtung 6 (vgl. Fig. 1) versetzt sind. Die beiden konvexen Abschnitte (bzw. Flächen) 9A liegen auf einer (gedachten) Zylinderfläche. Der Massenschwerpunkt des Grundkörpers 4 liegt ebenso auf dieser Zylinderfläche. Die beiden konvexen Abschnitte 9A liegen jeweils auf einem der Anschlagelemente 7A auf. Die planare erste Anschlagfläche 8 wird in diesem Ausführungsbeispiel von zwei planaren Abschnitten 8A der beiden Anschlagelemente 7A gebildet (siehe Fig. 1A und Fig. 1B). Jeweils ein konvexer Abschnitt 9A wirkt mit einem planaren Abschnitt 8A zusammen.

Fig. 2B zeigt eine Explosionsansicht des Grundkörpers 4 aus Fig. 2A. Die Abstreif-Durchführung 5 weist eine Drahteintrittsöffnung 17 und die Drahtaustrittsöffnung 16 auf. Ein Querschnitt der Drahteintrittsöffnung 17 ist größer als ein Querschnitt der Drahtaustrittsöffnung 16. Die Abstreif-Durchführung 5 ist in Drahtförderrichtung 6 (vgl. Fig. 1A) abschnittsweise konisch verjüngt. In diesem Ausführungsbeispiel läuft die Abstreif-Durchführung 5 ausgehend von der Drahteintrittsöffnung 17 trichterförmig (und daher konisch) zusammen. 6. Ein Querschnitt der Abstreif-Durchführung 5 in Drahtförderrichtung 6 ist abschnittsweise konstant. An einem der Drahtaustrittsöffnung 16 zugewandten Ende weist die Abstreif-Durchführung 5 eine Kalibrierzone 18 auf, in der der Querschnitt der Abstreif-Durchführung 5 konstant ist.

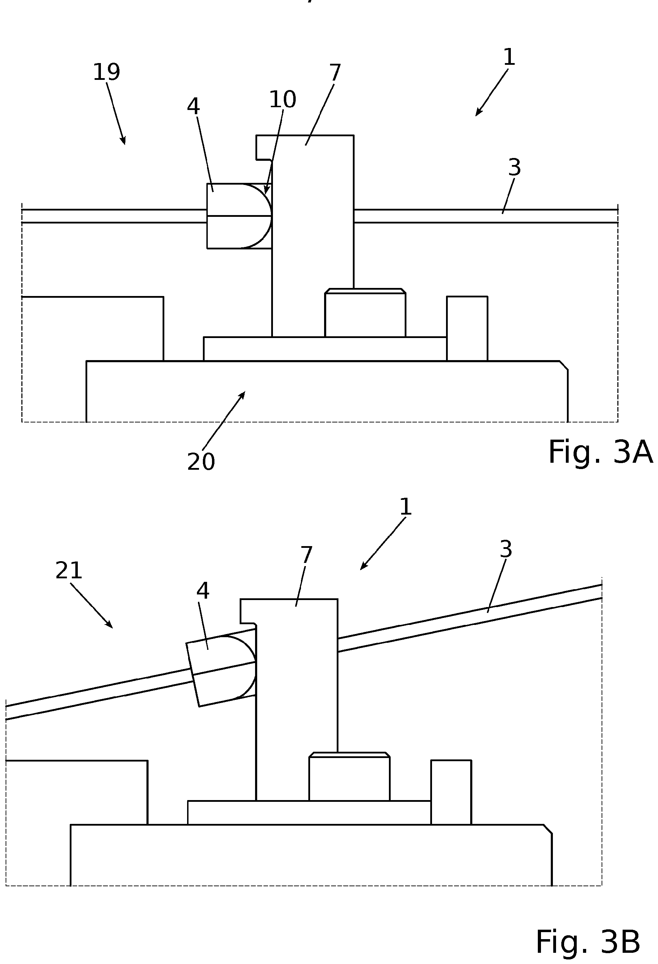

Fig. 3A zeigt schematisch eine seitliche Ansicht einer Abstreifvorrichtung 1 mit einem Draht 3 in einer ersten Stellung 19. Die Abstreifvorrichtung 1 ist auf einer mehrteiligen Halterung 20 angeordnet. Aufgrund einer durch das abgestreifte überschüssige Beschichtungsmaterial 2 auf den Grundkörper 4 übertragenen Axialkraft (die in Richtung der Drahtförderrichtung 6 wirkt) ist der Grundkörper 4 reibschlüssig mit dem der Anschlageinheit 7 verbunden. Durch die konvexe Krümmung 10 der zweiten Anschlagfläche 9 und der planaren ersten Anschlagfläche 8 ist der Grundkörper 4 in Summe vertikal verschiebbar und vertikal kippbar gelagert. Der Draht 3 ist in diesem Fall ideal horizontal ausgerichtet und tritt zentrisch durch die Abstreif-Durchführung 5 (vgl. Fig. 2A und 2B) durch. Durch die zentrische Durchführung kommt es in Summe zu keinen wirksamen Radialkräften (normal zur Drahtförderrichtung 6) auf den Grundkörper 4.

Kommt es beispielsweise durch äußere Einflüsse zu einer Fehlausrichtung des Drahtes 3 im Vergleich zur Abstreif-Durchführung 5 wird durch das Abstreifen des überschüssigen Beschichtungsmaterials 2 eine Radialkraft auf den Grundkörper 4 übertragen. Durch die verschiebbare und kippbare Lagerung des Grundkörpers 4 relativ zur Anschlageinheit 3, kann der Grundkörper entsprechend auf die Radialkraft reagieren.

Fig. 3B zeigt schematisch eine seitliche Ansicht der Abstreifvorrichtung 1 aus Fig. 3A in einer zweiten Stellung 21. Der Draht 3 ist in diesem Beispiel im Vergleich zur ersten Stellung 19 aus Fig. 3B vertikal verkippt und verschoben. Der Grundkörper 4 ist demnach entsprechend vertikal nach oben verschoben und verkippt, sodass eine Hauptachse des Drahts 3 wiederum mit einer Hauptachse der Abstreif-Durchführung 5 zusammenfällt und folglich eine homogenen Schichtdicke an Benetzungsmaterial 2 erreicht wird.

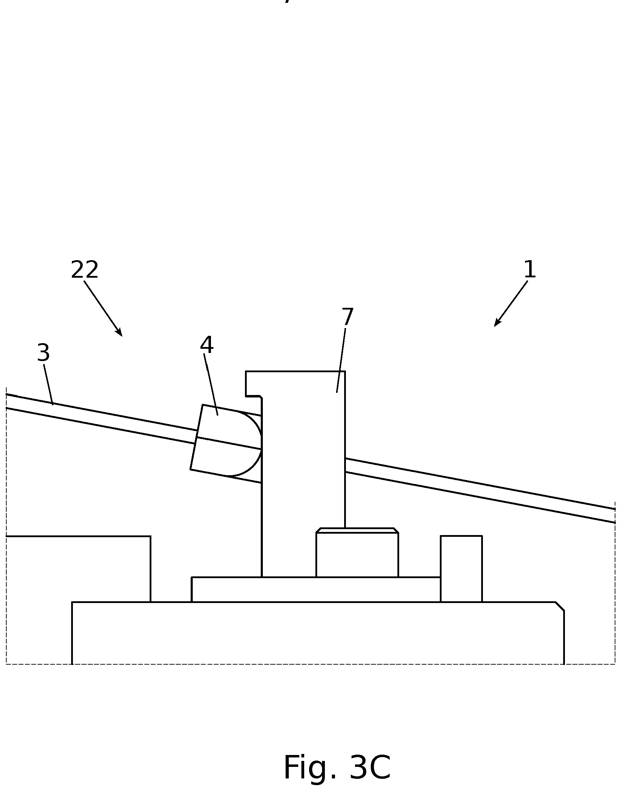

Ähnlich dazu zeigt Fig. 3C schematisch eine seitliche Ansicht der Abstreifvorrichtung 1 aus den Figuren 3A und 3B in einer dritten Stellung 22. Der Draht 3 ist wiederum im Vergleich zu den Darstellungen in Figuren 3A und 3B vertikal verschoben und vertikal verkippt. Der Grundkörper 4 ist entsprechend verschoben und verkippt.

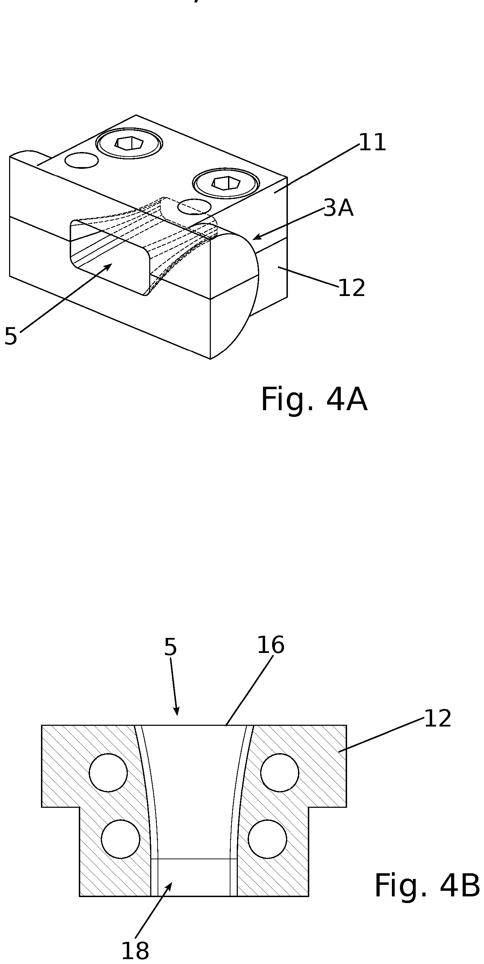

Fig. 4A zeigt schematisch eine weitere Ausführungsform eines Grundkörpers 4 (ähnlich dem aus Figur 2A). Der Grundkörper 4 ist zweiteilig und weist das erste Teil 11 und das zweite Teil 12 auf. In diesem Ausführungsbeispiel ist im Vergleich zu der Ausführungsform gemäß Figur 2A kein Formschluss mittels eines Formschlusselements vorgesehen. Das erste Teil 11 und das zweite Teil 12 sind in diesem Ausführungsbeispiel mittels Passstiften miteinander verbunden.

Fig. 4B zeigt eine Draufsicht auf das zweite Teil 12 des Grundkörpers 4 aus Fig. 4A. Die Abstreif-Durchführung 5 ist ausgehend von der Drahteintrittsöffnung 17 konisch verjüngt. In der Kalibrierzone 18 ist der Querschnitt der Abstreif-Durchführung 5 konstant.

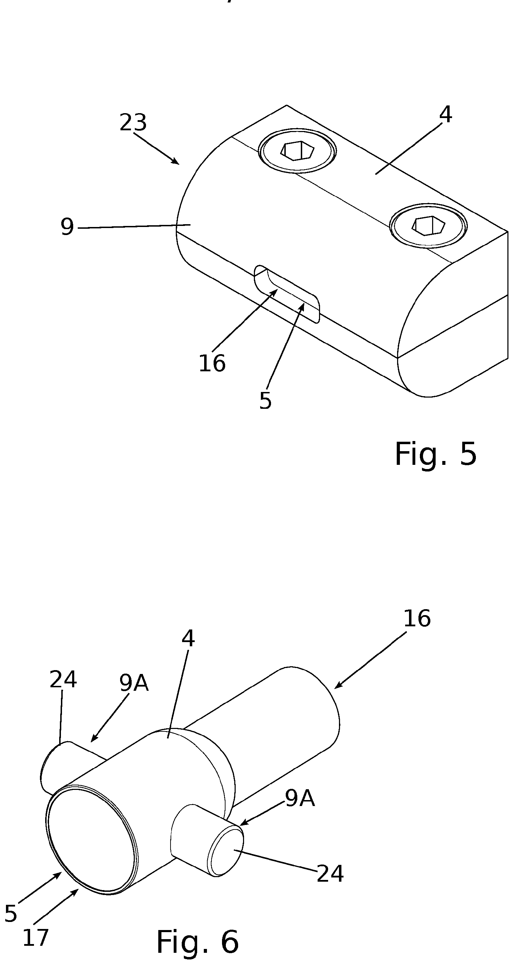

Fig. 5 zeigt eine weitere Ausführungsform des Grundkörpers 4. In diesem Ausführungsbeispiel ist die (konvexe) zweite Anschlagfläche 9 im Vergleich zur Drahtaustrittsöffnung 16 des Grundkörpers 4 entgegen der Drahtförderrichtung 6 nicht versetzt. Dadurch fällt eine Hauptebene der Drahtaustrittsöffnung 16 im bestimmungsgemäßen Zustand mit der Haupterstreckungsebene der(planaren) ersten Anschlagfläche 8 zusammen. Die konvexe zweite Anschlagfläche 9 liegt gemäß dieser beispielshaften Ausführungsform auf einem (durchgängige) halbzylinderförmigen Abschnitt 23.

Fig. 6 zeigt schematisch eine weitere Ausführungsform des Grundkörpers 4. In diesem Ausführungsbeispiel wird die (konvexe) zweite Anschlagfläche 9 von zwei konvexen Abschnitten 9A gebildet und ist im Vergleich zur Drahtaustrittsöffnung 16 des Grundkörpers 4 entgegen der Drahtförderrichtung 6 versetzt angeordnet. Die konvexen Abschnitte 9A liegen gemäß dieser beispielhaften Ausführungsform jeweils auf einem zylinderförmigen Abschnitt 24.

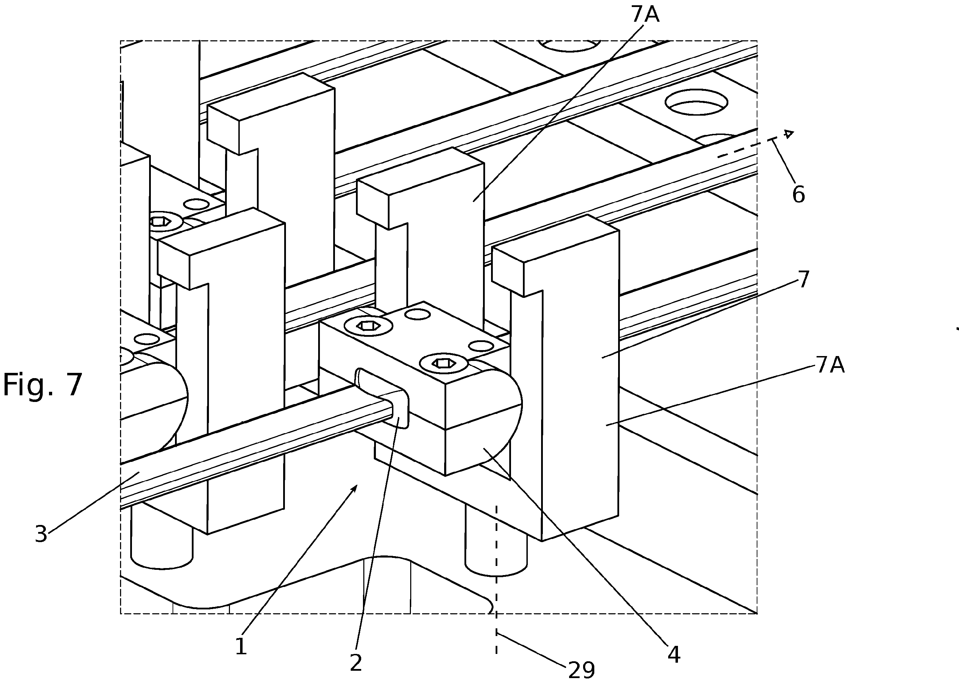

Fig. 7 zeigt schematisch eine Abstreifvorrichtung 1 mit einer weiteren Ausführungsform einer Anschlageinheit 7. Die Anschlageinheit 7 ist in diesem Ausführungsbeispiel um eine Achse 29 normal zur Drahtförderrichtung 6 drehbar gelagert. Dadurch hat der Grundkörper 4 zwei rotatorische Freiheitsgrade, wobei ein rotatorischer Freiheitsgrad aus der konvexen Krümmung 10 und der reibschlüssigen, verschiebbaren und kippbaren Lagerung des Grundkörpers 4 an der Anschlageinheit 7, und der zweite rotatorische Freiheitsgrad aus der drehbaren Lagerung der Anschlageinheit 7 und um die Achse 29 folgt. Durch die drehbare Lagerung der Anschlageinheit 7 kann zusätzlich zu einer vertikalen Verkippung auch eine horizontale Verkippung des Drahtes 3 ausgeglichen werden. Die beiden Anschlagelemente 7 entsprechen durch die drehbare Lagerung um die Achse 29 in etwa der Form einer Stimmgabel.

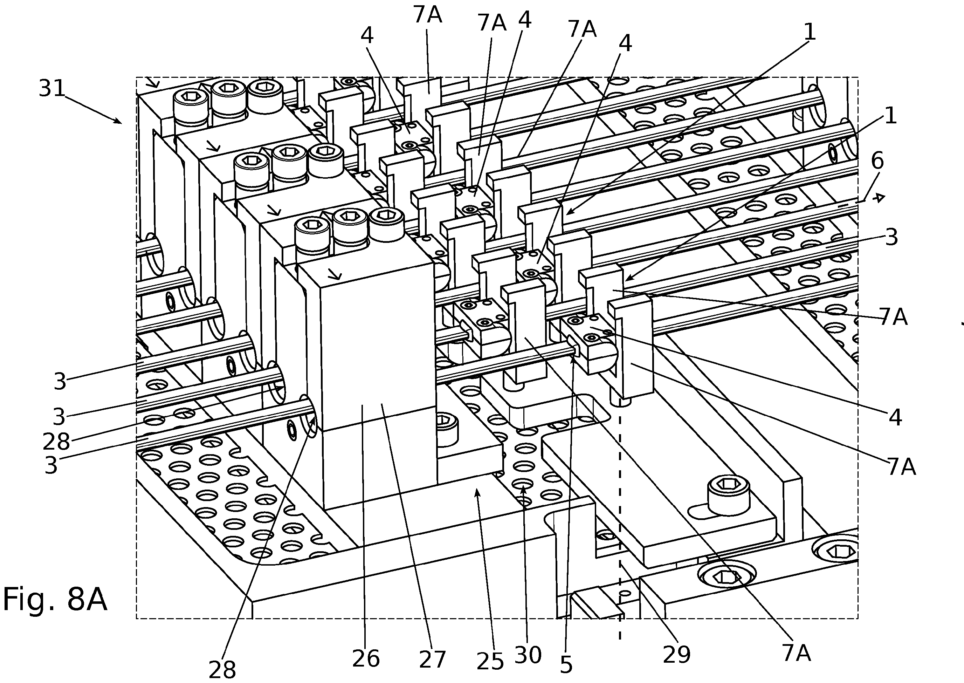

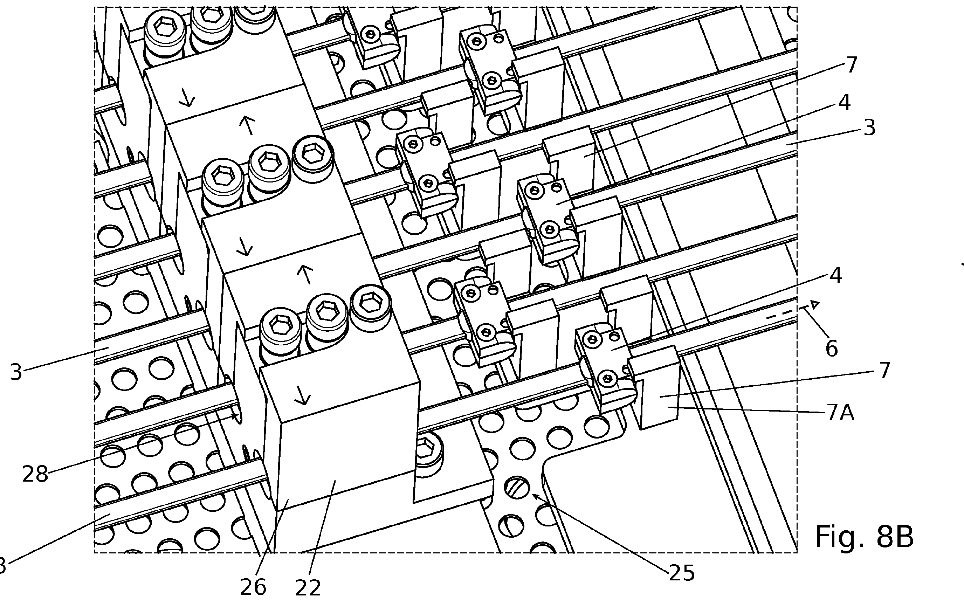

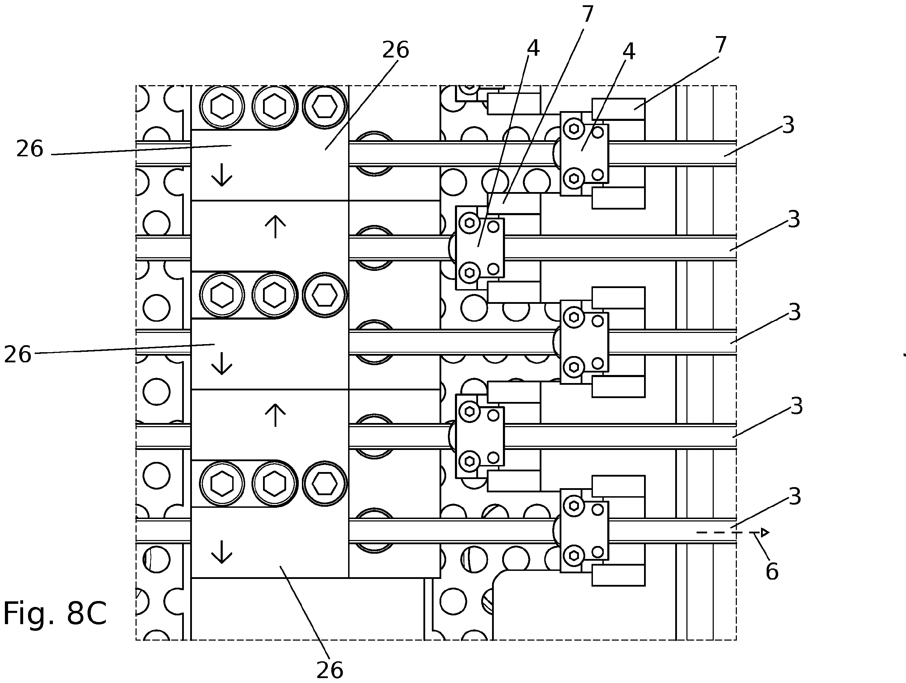

Die Figuren 8A, 8B und 8C zeigen schematisch eine Lackbank 31 mit mehreren parallelen Applikationseinheiten 25 und einem Becken 30 für abgestreiftes überflüssigen Beschichtungsmaterial 2. Es sind mehrere parallele Drähte 3 bzw. Drahtdeckungen vorgesehen, die parallel zueinander mit Beschichtungsmaterial 2 beschichtet werden.

Jede Applikationseinheit 25 zum Aufbringen zumindest einer Schicht des Beschichtungsmaterials 2 auf den Draht 3 weist eine Benetzungseinheit 26 zum Aufbringen des Beschichtungsmaterials 2 auf. Die Benetzungseinheit 26 weist einen Benetzungseinheit-Grundkörper 27 mit einer Benetzungs-Durchführung 28 für den Draht 3 auf. Weiters weist jede Applikationseinheit 25 eine Abstreifvorrichtung 1 zum Abstreifen von überschüssigem Beschichtungsmaterial 2 von dem Draht 3 auf, wobei der Draht 3 im bestimmungsgemäßen (und hier dargestellten) Zustand durch die Benetzungs-Durchführung 28 und die Abstreif-Durchführung 5 durchgeführt ist.

Während die Benetzungseinheiten 26 in Drahtförderrichtung 6 im Wesentlichen parallel zueinander ausgerichtet sind, sind benachbarte Abstreifvorrichtungen 1 in Drahtförderrichtung zueinander jeweils versetzt angeordnet. Dadurch werden zwei zueinander versetzte Kämme an Anschlagelementen 7A gebildet. Durch die versetzte Anordnung dieser Kämme sind die Abstreifeinheiten 1 besser zugänglich und wartbar. Alternativ können die Abstreifvorrichtungen 1 parallel angeordnet sein.

Eine Vorrichtung zur Herstellung von beschichteten Drähten weist eine Applikationseinheit 25 zum Aufbringen zumindest einer Schicht des Beschichtungsmaterials 2 und einen Ofen (nicht dargestellt) zum Verfestigen der aufgebrachten Schicht auf, wobei der Ofen in Drahtförderrichtung 6 nach der Applikationseinheit 25 angeordnet ist.

Ein Verfahren zur Herstellung von beschichteten Drähten 3 mit der Applikationseinheit 25 weist die folgenden Schritte auf:
- Fördern des Drahtes 3 in die Drahtförderrichtung 6 in Richtung der Applikationseinheit 25;
- Aufbringen einer Schicht des Beschichtungsmaterials 2 auf den Draht 3 mittels der Benetzungseinheit 26;
- Abstreifen von überschüssigem Beschichtungsmaterial 2 vom Draht 3 mittels der Abstreifvorrichtung 1;
- Verschieben und/oder Verkippen des Grundkörpers 4 durch eine von dem Beschichtungsmaterial 2 auf den Grundkörper 4 übertragenen Kraft (d.h. Radialkraft), sodass eine Hauptachse des Drahts 3 mit einer Hauptachse der Abstreif-Durchführung 5 zusammenfällt (siehe beispielsweise Figuren 3A-C).

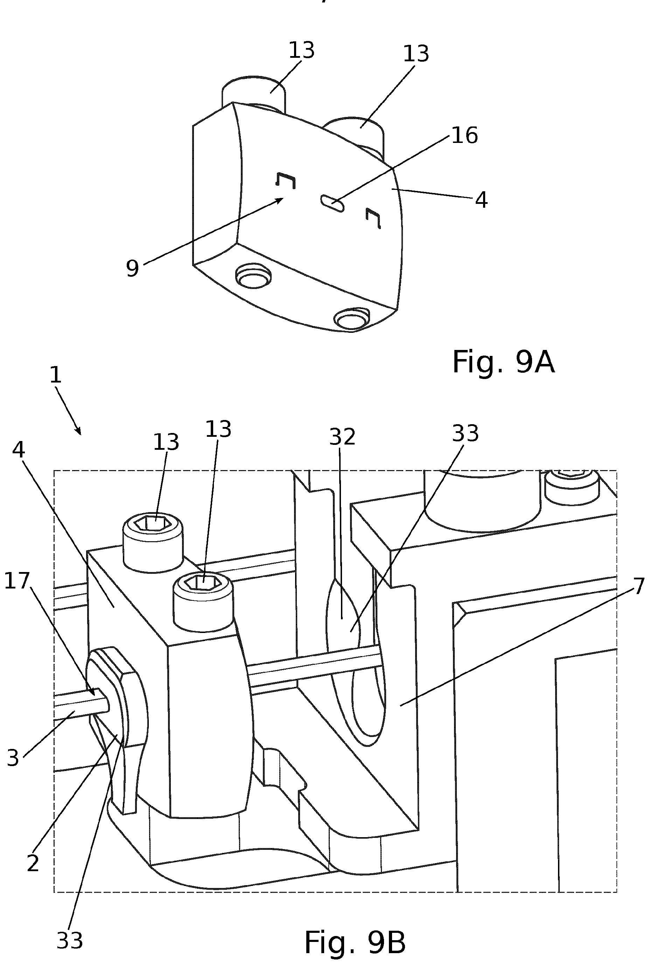

Fig. 9A zeigt schematisch eine weitere Ausführungsform des Grundkörpers 4 mit einer in zwei Richtungen gekrümmten zweiten Anschlagfläche 9. Die zweite Anschlagfläche 9 ist in diesem Ausführungsbeispiel in zwei zueinander orthogonale Richtungen gekrümmt. Der Grundkörper ist aufgrund dieser Krümmung in jede beliebige Richtung normal zur Drahtförderrichtung 6 kippbar gelagert. Im Vergleich dazu ist beispielsweise der Grundkörper 4 aus Fig. 1A lediglich in eine Richtung kippbar gelagert. Der Grundkörper 4 ist in zweiteilig ausgeführt und weist ein erstes Teil 11 und ein zweites Teil 12 auf, die mittels Schrauben 13 aneinander befestigt sind.

Der Grundkörper 4 kann (ähnlich wie beispielsweise in Fig. 1A dargestellt ist) mit einer planaren ersten Anschlagfläche 8 zusammenwirken.

Fig. 9B eine schematische Ansicht einer Abstreifvorrichtung 1 mit dem Grundkörper aus Fig. 9A und einer Anschlageinheit 7. In diesem Ausführungsbeispiel weist die Anschlageinheit 7 eine konkave Ausnehmung 32 auf. Die erste Anschlagfläche 8 weist daher eine konkave Krümmung auf. Die konkave Krümmung der ersten Anschlagfläche 8 wirkt mit der konvexen Krümmung der zweiten Anschlagfläche 9 zusammen, sodass der Grundkörper 4 mittels der auf den Grundkörper 4 übertragenen Axialkraft an bzw. in der Anschlageinheit gelagert und in der translatorischen Bewegung eingeschränkt ist.

Das überschüssige Beschichtungsmaterial 2 bildet an der Drahteintrittsöffnung 17 des Grundkörpers ein in erster Näherung kugelkalottenförmiges Volumen 33. Durch die Gravitation fließt das überschüssige Beschichtungsmaterial 2 normal zur Drahtförderrichtung 6 nach unten und tropft letztlich von dem Grundkörper 4 ab.

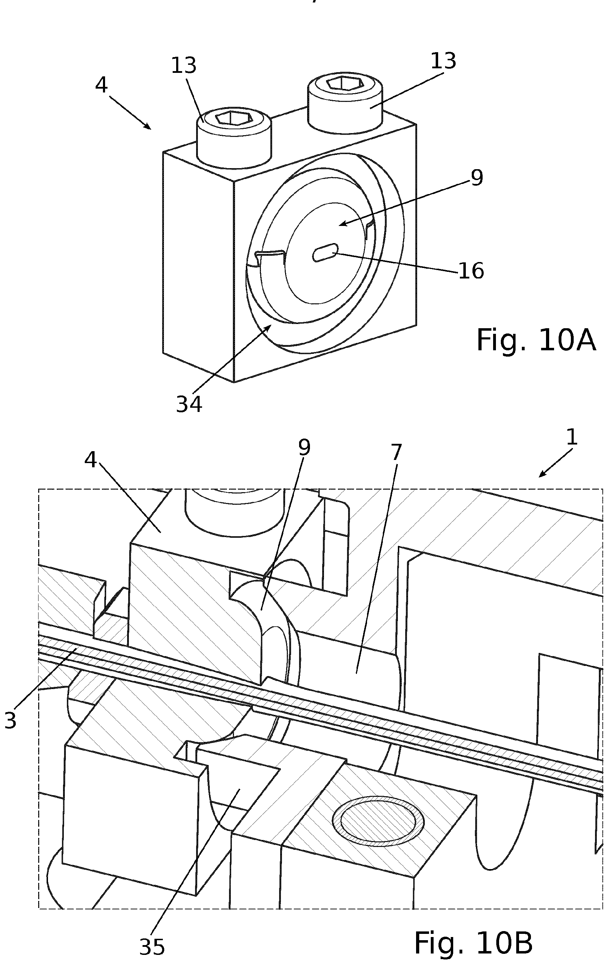

Fig. 10A zeigt schematisch eine weitere Ausführungsform eines Grundkörpers 3 mit einer in zwei Richtungen gekrümmten zweiten Anschlagfläche 9. Im Vergleich zur Ausführungsform gemäß Figur 9a, weist diese Ausführungsform eine kreisförmige Ausnehmung 34 auf. Diese kreisförmige Ausnehmung 34 wirkt mit einem entsprechenden Gegenelement 35 der Anschlageinheit 7 zusammen, wie in der schematischen Schnittansicht aus Fig. 10 zu sehen ist. Das Gegenelement 35 weist (ähnlich zu der Ausführungsform gemäß Fig. 9B) eine konkave Krümmung auf und greift in die ringförmige Ausnehmung ein, um die translatorische Bewegungsfreiheit des Grundkörpers 4 einzuschränken.

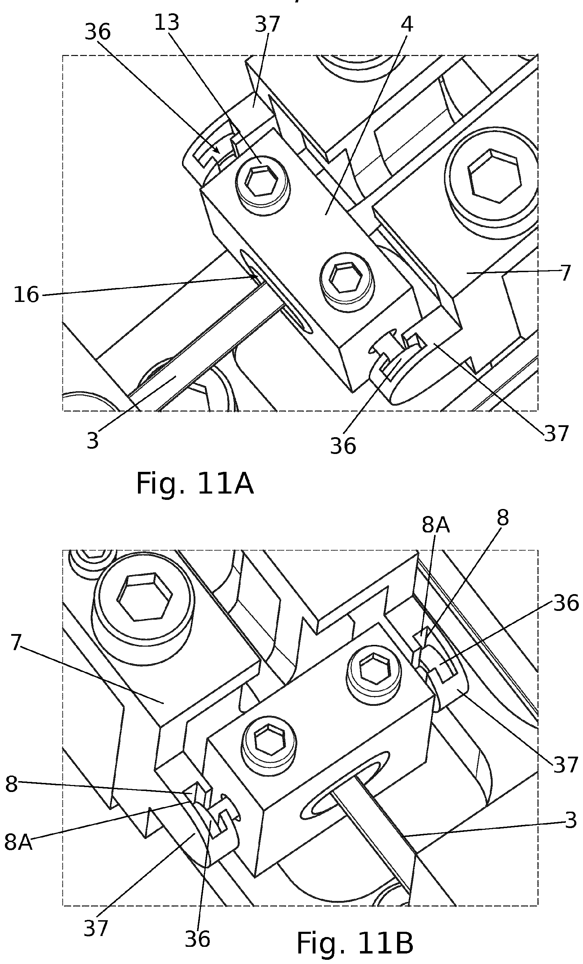

Figuren 11A und 11B zeigen schematisch eine weitere Ausführungsform einer Abstreifvorrichtung 1 mit einem Grundkörper 4 und einer Anschlageinheit 7. In diesem Ausführungsbeispiel weist der Grundkörper 4 seitlich zwei zylinderförmige Lagerungselemente 36 auf. Die zylinderförmigen Lagerungselemente 36 weisen die erste Anschlagfläche 9 auf, die von zwei konvexen Abschnitten 9A gebildet wird (ähnlich zu der Ausführungsform gemäß Fig. 2A). Die Anschlageinheit 7 weist zwei Führungen 37 auf. Die beiden zylinderförmigen Lagerungselemente 36 greifen jeweils in einer Führung ein 37. Die Führungen 37 weisen die erste Anschlagfläche 8 auf, die von zwei planaren Abschnitten 8A gebildet wird. Die beiden zylinderförmigen Lagerungselemente 36 können jeweils an einem planaren Abschnitt 8A abrollen und gegen jeweils einen planaren Abschnitt 8A verschoben werden. Der Grundkörper 4 ist daher normal zur Drahtförderrichtung 6 kippbar und verschiebbar gelagert.

## Patentansprüche

1. Abstreifvorrichtung (1) zum Abstreifen von überschüssigem Beschichtungsmaterial (2) von einem mit Beschichtungsmaterial (2) benetzten Draht (4), aufweisend:
- einen Grundkörper (4) mit einer Abstreif-Durchführung (5) für den Draht (3), wobei der Draht (3) im bestimmungsgemäßen Zustand durch die Abstreif-Durchführung (5) durchgeführt ist und in eine Drahtförderrichtung (6) gefördert wird; und
- eine in Drahtförderrichtung (6) nach dem Grundkörper (4) angeordnete Anschlageinheit (7);
wobei die Anschlageinheit (7) eine erste Anschlagfläche (8) aufweist, wobei die erste Anschlagfläche (8) im bestimmungsgemäßen Zustand dem Grundkörper (4) zugewandt ist,
wobei der Grundkörper (4) eine zweite Anschlagfläche (9) aufweist, wobei die zweite Anschlagfläche (9) im bestimmungsgemäßen Zustand der ersten Anschlagfläche (8) zugewandt ist,
**dadurch gekennzeichnet, dass**
die erste Anschlagfläche (8) bei bestimmungsgemäßer Verwendung zumindest abschnittsweise reibschlüssig mit der zweiten Anschlagfläche (9) verbunden ist, wobei der Grundkörper (4) normal zur Drahtförderrichtung (6) verschiebbar gelagert ist, wobei die erste Anschlagfläche (8) oder die zweite Anschlagfläche (9) eine konvexe Krümmung (10) aufweist.

2. Abstreifvorrichtung (1) nach Anspruch 1, **dadurch gekennzeichnet, dass** die erste Anschlagfläche (8) planar ist und die zweite Anschlagfläche (9) die konvexe Krümmung (10) aufweist.

3. Abstreifvorrichtung (1) nach Anspruch 2, **dadurch gekennzeichnet, dass** der Grundkörper (4) die Abstreif-Durchführung (5) mit einer Drahteintrittsöffnung (17) und einer Drahtaustrittsöffnung (16) aufweist, wobei eine Hauptebene der Drahtaustrittsöffnung (16) im bestimmungsgemäßen Zustand mit einer Haupterstreckungsebene der ersten Anschlagfläche (8) zusammenfällt.

4. Abstreifvorrichtung (1) nach Anspruch 2, **dadurch gekennzeichnet, dass** der Grundkörper (4) einen Massenschwerpunkt aufweist, wobei der Massenschwerpunkt im bestimmungsgemäßen Zustand in einer Haupterstreckungsebene der ersten Anschlagfläche (8) liegt.

5. Abstreifvorrichtung (1) nach einem der vorhergehenden Ansprüche, **dadurch gekennzeichnet, dass** die Abstreif-Durchführung (5) in Drahtförderrichtung (6) zumindest abschnittsweise konisch verjüngt ist.

6. Abstreifvorrichtung (1) nach einem der vorhergehenden Ansprüche, **dadurch gekennzeichnet, dass** ein Querschnitt der Abstreif-Durchführung (5) in Drahtförderrichtung (6) abschnittsweise konstant ist.

7. Abstreifvorrichtung (1) nach einem der vorhergehenden Ansprüche, **dadurch gekennzeichnet, dass** die Anschlageinheit (7) zwei Anschlagelemente (7) aufweist, wobei die Anschlagelemente (7) quer zur Drahtförderrichtung (6) voneinander beabstandet sind.

8. Abstreifvorrichtung (1) nach einer der vorhergehenden Ansprüche, **dadurch gekennzeichnet, dass** der Grundkörper (4) zumindest zwei Teile (11, 12) aufweist.

9. Abstreifvorrichtung (1) nach einem der vorhergehenden Ansprüche, **dadurch gekennzeichnet, dass** die Anschlageinheit (7) um eine Achse (29) normal zur Drahtförderrichtung (6) drehbar gelagert ist.

10. Abstreifvorrichtung (1) nach einem der vorhergehenden Ansprüche, **dadurch gekennzeichnet, dass** ein Draht (2) vorgesehen ist und durch die Abstreif-Durchführung (5) durchgeführt ist.

11. Applikationseinheit (25) zum Aufbringen zumindest einer Schicht eines Beschichtungsmaterials (2) auf einen Draht (3) aufweisend:
- eine Benetzungseinheit (26) zum Aufbringen des Beschichtungsmaterials (2), wobei die Benetzungseinheit (26) einen Benetzungseinheit-Grundkörper (27) mit einer Benetzungs-Durchführung (28) für den Draht (3) aufweist;
**gekennzeichnet durch**
- eine Abstreifvorrichtung (1) nach einem der vorhergehenden Ansprüche zum Abstreifen von überschüssigem Beschichtungsmaterial (2) von dem Draht (3), wobei der Draht (3) im bestimmungsgemäßen Zustand durch die Benetzungs-Durchführung (28) und die Abstreif-Durchführung (5) durchgeführt ist.

12. Vorrichtung zur Herstellung von beschichteten Drähten (3) **gekennzeichnet durch** eine Applikationseinheit (25) nach Anspruch 11 zum Aufbringen zumindest einer Schicht eines Beschichtungsmaterials (2) und einem Ofen zum Verfestigen der aufgebrachten Schicht, wobei der Ofen in Drahtförderrichtung (6) nach der Applikationseinheit (25) angeordnet ist.

13. Verfahren zur Herstellung von beschichteten Drähten (3) mit einer Applikationseinheit (25) nach Anspruch 11 mit den Schritten:
- Fördern eines Drahtes (3) in eine Drahtförderrichtung (6) in Richtung der Applikationseinheit (25);
- Aufbringen einer Schicht des Beschichtungsmaterials (2) auf den Draht (3) mittels der Benetzungseinheit (25);
- Abstreifen von überschüssigem Beschichtungsmaterial (2) vom Draht (3) mittels der Abstreifvorrichtung (1);
- Verschieben und/oder Verkippen des Grundkörpers (4) durch eine von dem Beschichtungsmaterial (2) auf den Grundkörper (4) übertragenen Kraft, sodass eine Hauptachse des Drahts (3) mit einer Hauptachse der Abstreif-Durchführung (5) zusammenfällt.
